# FASCICULE DE BREVET EUROPEEN

(11) **EP 2 816 016 B1**
(45) Date de publication et mention de la délivrance du brevet: **13.09.2017**
(21) Numéro de dépôt: 14173384.0
(22) Date de dépôt: 23.06.2014
(51) Int. Cl.: C02F 11/16, C02F 11/12, C02F 11/14, C02F 11/18

(54) **Procédé et installation de séchage de boues**
Verfahren und Anlage zum Trocknen von Schlämmen
Method and installation for drying sludge

(30) Priorité: 21.06.2013 FR 1355929
(43) Date de publication de la demande: 24.12.2014
(73) Titulaire: SAUR, 78280 Guyancourt (FR)
(72) Inventeur: GASTE, Benoît, 49400 SAUMUR (FR); BOILLOT, Mathieu, 78220 VIROFLAY (FR)
(74) Mandataire: Regimbeau

(56) Documents cités:
- WO-A1-98/16328
- DE-A1- 1 709 460
- DE-U1- 9 406 944
- FR-A1- 2 883 280

## Description

### DOMAINE DE L'INVENTION

L'invention concerne le domaine du traitement des boues issues des effluents urbains industriels ou mixtes. L'invention s'applique notamment au traitement des boues issues de la potabilisation ou de l'épuration de l'eau, à savoir : les boues d'hydroxydes ou les boues d'épuration, ces boues pouvant contenir du charbon actif.

### ETAT DE LA TECHNIQUE

Le traitement des boues inclut généralement une étape de déshydratation des boues qui permet d'extraire de l'eau contenue dans les boues de manière à réduire au maximum le volume occupé par ces boues et accroître leur siccité.

On connaît des installations de traitement comprenant un lit de séchage destiné à être recouvert de boues à traiter. Le lit de séchage est généralement formé de couches de sable et de graviers permettant la percolation et le drainage d'une partie de l'eau contenue dans les boues. Ces installations ont pour fonction dans un premier temps d'égoutter les boues à traiter et, dans un deuxième temps, de sécher les boues. Ce séchage reste fortement soumis aux aléas climatiques.

Un inconvénient de ce type d'installations est que le ramassage des boues séchées après traitement est difficile. En effet, l'enlèvement des boues séchées doit être réalisé de manière manuelle par un opérateur.

En outre, les boues ont tendance à se mêler aux couches de sable du lit de séchage, de sorte qu'au cours de l'enlèvement des boues séchées, l'opérateur prélève nécessairement une partie du sable mêlé aux boues. C'est pourquoi, il est nécessaire de reconstituer le lit de séchage par un apport de sable neuf.

Un autre inconvénient de ce type d'installations est que la pluie réhumidifie les boues pendant leur séchage.

Par ailleurs, les boues à traiter ont tendance à s'agglomérer en formant une couche imperméable qui colmate le lit de séchage et empêche la percolation de l'eau. C'est pourquoi, ces installations ne permettent de traiter qu'un volume de boues par unité de surface, limité.

On connaît également des installations de traitement par Rhizophyte® (proposées par la société SAUR). Ces installations comprennent un lit de séchage destiné à être recouvert de boues à traiter. Le lit de séchage inclut des couches de sable et de graviers plantées de macrophytes (roseaux). Les macrophytes forment un réseau de racines qui drainent les eaux issues des boues à traiter, favorisent la colonisation du massif par les bactéries et évitent le colmatage du lit de séchage. Les macrophytes contribuent ainsi à améliorer le rendement de ces installations.

Le document FR 2 883 280 décrit une installation de traitement de boues comprenant un lit de séchage destiné à être recouvert de boues à traiter. Le lit de séchage comprend une couche drainante formée par la superposition d'une couche de graviers et d'une couche de sable à travers lesquelles de l'eau issue des boues peut percoler, et deux toiles perméables s'étendant sur la couche drainante, entre les boues à traiter et la couche drainante. L'une des toiles est fixe par rapport à la couche drainante, tandis que l'autre toile est mobile.

Les deux toiles ont pour fonction d'éviter que les boues séchées ne soient mêlées à la couche drainante. De plus, la toile mobile facilite la récupération des boues après traitement.

Néanmoins, malgré la présence des deux toiles, une faible fraction des boues s'écoule vers la couche drainante et entraine un colmatage de la couche drainante au bout de plusieurs années. Le nettoyage du massif drainant est une opération complexe, qui nécessite notamment un retrait préalable des toiles et un retrait du massif drainant pour le laver, voire le renouveler complètement. De plus, l'opération de nettoyage immobilise le lit de séchage, ce qui réduit temporairement les capacités de traitement de l'installation.

### RESUME DE L'INVENTION

Un but de l'invention est de faciliter l'entretien de l'installation de traitement.

Ce but est atteint dans le cadre de la présente invention grâce à une installation de traitement de boues comprenant un ensemble filtrant destiné à être recouvert de boues à traiter, l'ensemble filtrant comprenant :
- un support comprenant une grille de support rigide présentant une face supérieure et une face inférieure et comprenant une pluralité d'ouvertures s'étendant entre la face supérieure et la face inférieure, à travers lesquelles de l'eau issue des boues peut s'écouler,
- deux toiles souples, incluant une première toile fixe par rapport à la grille et disposée en contact avec la face supérieure de la grille, et une deuxième toile mobile par rapport à la grille, de sorte que lorsque les boues à traiter recouvrent l'ensemble filtrant, les toiles se trouvent entre les boues à traiter et la grille, et
- des moyens mécaniques adaptés pour déplacer la deuxième toile souple par rapport à la grille.

Une telle installation ne nécessite pas la présence d'un massif drainant formé de couches de graviers ou de sable. La suppression des couches de graviers et de sable et leur remplacement par un support à grille a pour effet de faciliter l'entretien de l'installation.

L'installation peut présenter en outre les caractéristiques suivantes :
- l'installation comprend un bassin de récupération de l'eau comprenant un fond, et le support est adapté pour maintenir la grille à distance du fond de manière à ménager un espace dépourvu de gravier ou de sable entre la grille et le fond,
- l'installation comprend un réseau de collecte en extrémité de bassin, pour collecter l'eau issue des boues s'écoulant sur le fond du bassin,
- la grille est maintenue à une distance supérieure ou égale à 5 centimètres du fond du bassin,
- les ouvertures de la grille présentent des dimensions comprises entre 10 et 40 millimètres,
- la toile souple est perméable pour permettre à l'eau issue des boues de s'écouler à travers la toile, tout en retenant de la matière en suspension dans les boues à traiter,
- les moyens mécaniques comprennent un rouleau sur lequel la toile souple peut être enroulée,
- les moyens mécaniques comprennent des moyens d'entraînement adaptés pour entraîner le rouleau en rotation,
- l'installation comprend des moyens pour récupérer les boues séchées entraînées par la toile souple lors de son déplacement,
- les moyens pour récupérer la boue séchée comprennent une racle destinée à venir en contact avec la toile souple lorsque la première toile souple est déplacée par rapport à la grille,
- les toiles souples sont perméables, la première toile souple ayant des pores plus petits que ceux de la deuxième toile souple,
- les pores de la première toile souple ont des dimensions comprises entre 1 et 4 millimètres,
- les pores de la deuxième toile souple ont des dimensions comprises entre 50 et 1000 micromètres,
- l'installation comprend en outre une serre s'étendant au-dessus de l'ensemble filtrant,
- l'installation comprend des moyens de ventilation adaptés pour générer une circulation de l'air autour des boues à traiter,
- l'installation comprend des moyens d'alimentation adaptés pour amener des boues à traiter sous forme liquide en vue de recouvrir la première toile souple de boues,
- l'installation comprend en outre des moyens pour floculer les boues à traiter avant de recouvrir la première toile souple avec les boues,
- l'installation comprend plusieurs ensembles filtrants.

L'invention se rapporte également à un procédé de traitement de boues, comprenant des étapes de :
- recouvrir un ensemble filtrant de boues à traiter, l'ensemble filtrant comprenant un support comprenant une grille rigide présentant une face supérieure et une face inférieure et comprenant une pluralité d'ouvertures s'étendant entre la face supérieure et la face inférieure, et deux toiles souples disposées entre les boues traiter et la grille, incluant une première toile fixe par rapport à la grille et disposée en contact avec la face supérieure de la grille, et une deuxième toile mobile par rapport à la grille,
- laisser reposer les boues de manière à ce que de l'eau issue des boues s'écoule à travers les ouvertures de la grille, et
- déplacer en translation la deuxième toile souple par rapport à la grille.

Dans une mise en oeuvre du procédé, la grille est maintenue à distance du fond d'un bassin de récupération de l'eau, de manière à ménager un espace dépourvu de gravier ou de sable entre la grille et le fond.

La grille est maintenue de préférence à une distance supérieure ou égale à 5 centimètres du fond du bassin.

Dans une mise en oeuvre du procédé, les ouvertures de la grille présentent des dimensions comprises entre 10 et 40 millimètres.

Dans une mise en oeuvre du procédé, la toile souple est perméable pour permettre à l'eau issue des boues de s'écouler à travers la toile, tout en retenant de la matière en suspension dans la boue à traiter.

L'étape consistant à déplacer la toile souple peut en outre comprendre l'étape consistant à enrouler la toile souple sur un rouleau.

Dans une mise en oeuvre du procédé, le rouleau est entraîné en rotation par des moyens mécaniques d'entraînement.

Le procédé peut comprendre en outre l'étape consistant à récupérer les boues séchées entraînées par la toile souple lors de son déplacement.

L'étape consistant à récupérer les boues séchées peut comprendre l'étape consistant à racler la boue séchée sur la toile souple à mesure que la toile souple est déplacée par rapport à la grille.

Dans une mise en oeuvre du procédé, les toiles sont perméables, la première toile souple ayant des pores plus petits que ceux de la deuxième toile souple.

Les pores de la première toile souple ont de préférence des dimensions comprises entre 1 et 4 millimètres

Les pores de la deuxième toile souple ont de préférence des dimensions comprises entre 50 et 1000 micromètres.

Dans une mise en oeuvre du procédé, une serre s'étend au-dessus de l'ensemble filtrant.

De l'air peut être entraîné en circulation autour de la boue à traiter par des moyens de ventilation.

Le procédé peut comprendre une étape consistant à amener des boues à traiter sous forme liquide via des moyens d'alimentation et recouvrir la première toile souple de boues.

Le procédé peut comprendre en outre une étape consistant à floculer les boues à traiter avant de recouvrir la première toile souple avec les boues.

Dans une mise en oeuvre du procédé, plusieurs ensembles filtrant sont utilisés en parallèle.

En particulier, le procédé peut comprendre les étapes consistant à appliquer à plusieurs ensembles filtrant les étapes qui précèdent de manière décalée dans le temps.

### PRESENTATION DES DESSINS

D'autres caractéristiques et avantages ressortiront encore de la description qui suit, laquelle est purement illustrative et non limitative et doit être lue en regard des figures annexées parmi lesquelles :
- la figure 1, constituée des figures partielles 1A, 1B et 1C, représente une installation de traitement conforme à un mode de réalisation possible de l'invention, en vue de côté et en coupe selon une direction longitudinale de l'installation,
- la figure 2, constituée des figures partielles 2A, 2B et 2C, représente l'installation de traitement en vue de dessus,
- la figure 3 représente l'installation de traitement en vue de côté et en coupe selon une direction transversale de l'installation,
- la figure 4 représente de manière schématique un ensemble filtrant formant partie de l'installation de traitement,
- les figures 5 à 11 illustrent de manière schématique les différentes étapes d'un procédé de traitement conforme à un mode de mise en oeuvre de l'invention.

### DESCRIPTION DETAILLEE D'UN MODE DE REALISATION

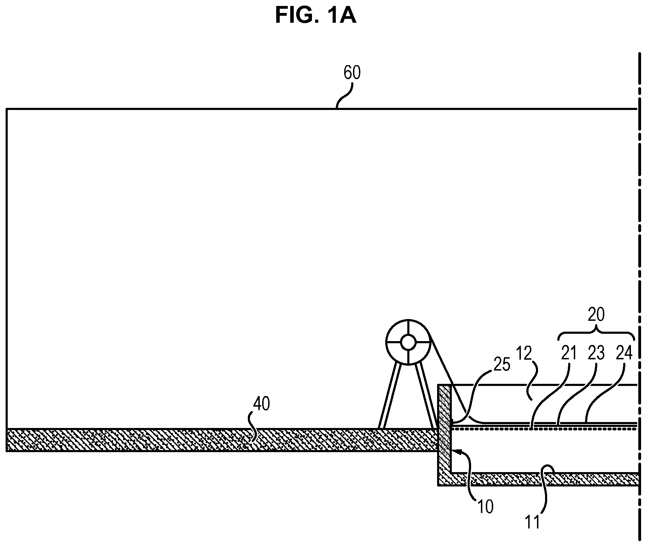

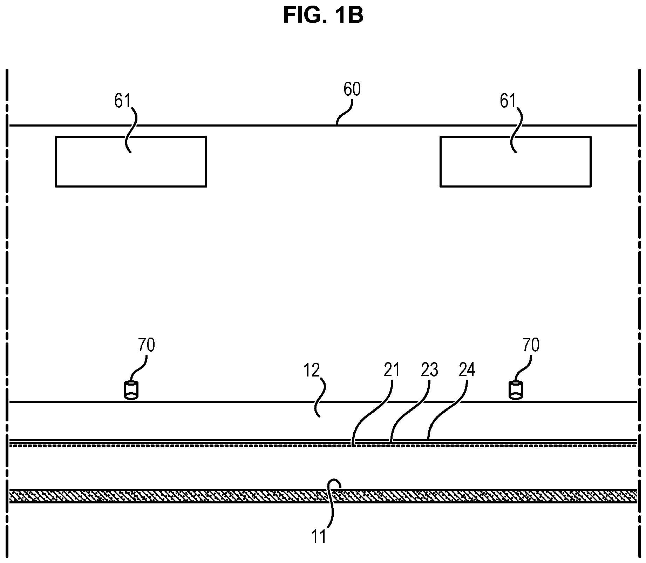

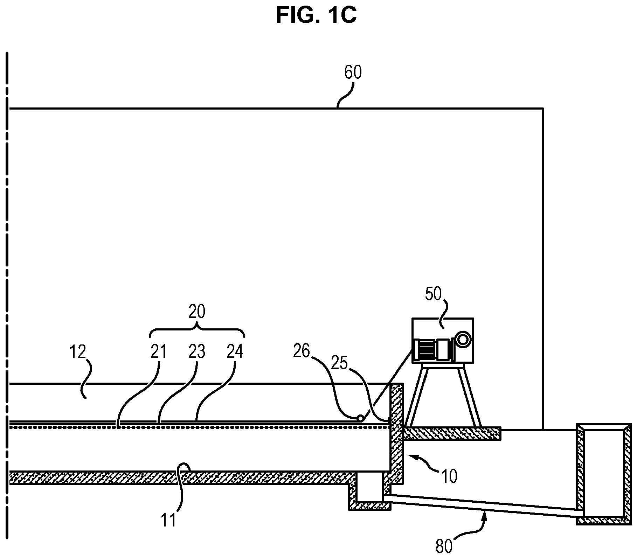

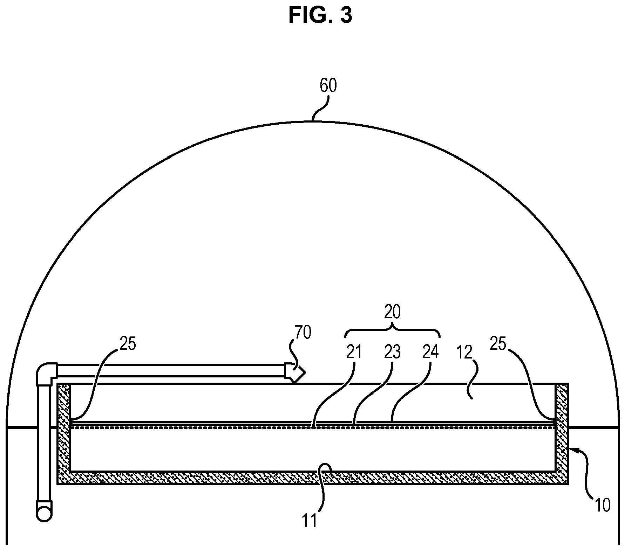

L'installation de traitement représentée sur les figures 1 à 4 comprend un bassin 10 comprenant des bords 12 en béton et un fond 11 formé d'une toile en géotextile étanche. Le bassin 10 présente une forme générale rectangulaire ayant une longueur de 20 mètres et une largeur de 5 mètres. Le bassin 10 est agencé de sorte que le fond 11 est incliné par rapport à l'horizontale et présente une pente dans la direction longitudinale du bassin d'environ 5 millimètres par mètre. Le fond 11 est incliné de manière à diriger les égouttures (non représentées) vers un réseau de collecte 80 en extrémité de bassin.

L'installation comprend un ensemble filtrant 20 adapté pour recevoir les boues 1 à traiter.

L'ensemble filtrant 20 est formé par la superposition d'un support 21, d'une toile fixe 23 et d'une toile mobile 24. Le support 21 maintient les deux toiles 23 et 24 à distance du fond 11 du bassin 10 qui reçoit les égouttures. A cet effet, le support 21 comprend une grille 210 et des pieds 211 venant en appui sur le fond 11 du bassin 10 de manière à maintenir la grille 210 à distance du fond 11 du bassin 10. La grille 210 est maintenue à une distance supérieure ou égale à 5 centimètres du fond 11 du bassin 10.

En utilisation, le support 21 supporte donc le poids des toiles 23 et 24 et des boues 1 à traiter.

La grille 210 est une grille rigide formée en matière plastique, par exemple en polyester ou en polypropylène.

La grille 210 présente une face supérieure 212 et une face inférieure 213 et comprenant une pluralité d'ouvertures 216 traversantes s'étendant entre la face supérieure 212 et la face inférieure 213, à travers lesquelles de l'eau issue des boues 1 peut s'écouler.

La grille 210 comprend une pluralité de lames longitudinales 214 parallèles entre elles et une pluralité de lames transversales 215 parallèles entre elles. Les lames transversales 215 s'étendent perpendiculairement aux lames longitudinales 214 et coupent les lames longitudinales 214. Les lames longitudinales 214 et transversales 215 définissent entre elles les ouvertures 216. Les ouvertures 216 sont de forme rectangulaire ou carrée. L'espacement entre deux lames longitudinales 214 successives, respectivement entre deux lames transversales 215 successives, est compris entre 10 et 40 millimètres, de sorte que les ouvertures 216 présentent des dimensions (largeur et longueur) comprises entre 10 et 40 millimètres.

De plus, la grille 210 autorise un écoulement intégral des égouttures traversant les toiles 23 et 24.

La toile fixe 23 s'étend sur toute la face supérieure 212 de la grille 210.

De même, la toile mobile 24 s'étend sur toute la surface supérieure de la toile fixe 23.

Les toiles fixe 23 et mobile 24 sont des toiles souples, perméables à l'eau, formées en un matériau polymère tel que du chlorure de polyvinyle (PVC), du polyéthylène (PE), du polytéréphtalate d'éthylène (PET) ou du polyester. Les toiles fixe 23 et mobile 24 peuvent être formées de fils tissés ou de fibres non-tissées.

La toile fixe 23 remplit deux fonctions principales. Une première fonction principale de la toile fixe 23 est de séparer l'eau des matières en suspension contenues dans les boues à traiter. Une deuxième fonction principale de la toile fixe 23 est de supporter mécaniquement les boues à traiter. Autrement dit, la toile fixe 23 ne doit pas fléchir sous le poids des boues au-dessus de chaque ouverture 216 de la gille 210 sous-jacente.

La toile fixe 23 est par exemple une toile de table d'égouttage ou de filtre à bandes pressantes. La toile fixe 23 présente des pores (ou des mailles) ayant des dimensions de l'ordre de 50 à 1000 micromètres. La toile fixe 23 est fixée le long de chacun de ses bords 25 aux bords en béton 12 du bassin 10.

La porosité de la toile fixe 23 est importante pour le fonctionnement de l'installation. En effet, si la porosité est trop faible, l'eau aura des difficultés à s'écouler à travers la toile fixe 23, la durée d'égouttage sera élevée et la matière en suspension dans l'eau risque de colmater la toile fixe 23. Autrement dit, après un cycle de séchage (une fois les boues sèches récupérées, la toile fixe 23 risque de ne plus être perméable à l'eau et de ne plus permettre un égouttage de l'eau. Si au contraire, la porosité est trop élevée, les matières en suspension traverseront la toile fixe 23 et seront évacués avec les égouttures. Autrement dit, la fonction de filtrage ne sera plus assurée.

Les caractéristiques de la toile fixe 23 dépendent du type de boues à traiter. Par exemple, dans le cas de boues d'eau usée, préalablement floculées, la toile fixe 23 présente des pores (ou des mailles) de 500 micromètres environ. La perméabilité mesurée en eau claire sous 5 kiloPascals est de l'ordre de 700 litres par mètre carré par seconde.

La toile mobile 24 a pour principale fonction de faciliter la récupération des boues sèches. La toile mobile 24 doit être souple et résistante à la traction afin de résister à un enroulage autour d'un treuil.

La toile mobile 24 est par exemple une toile de type « brise vent » couramment utilisée dans le domaine de l'agriculture. La toile mobile 24 présente des pores (ou des mailles) ayant des dimensions de l'ordre de 1 à 4 millimètres.

Dans le cas de boues d'eau usée, préalablement floculées, la toile mobile 24 présente des pores de 1 millimètre, et un seuil de résistance à la rupture supérieur à 200 décaNewton pour 5 centimètres.

En tout état de cause, la toile fixe 23 comprend des pores (ou des mailles) plus petits que ceux de la toile mobile 24. Ainsi, la toile fixe 23, présente une perméabilité inférieure à celle de la toile mobile 24.

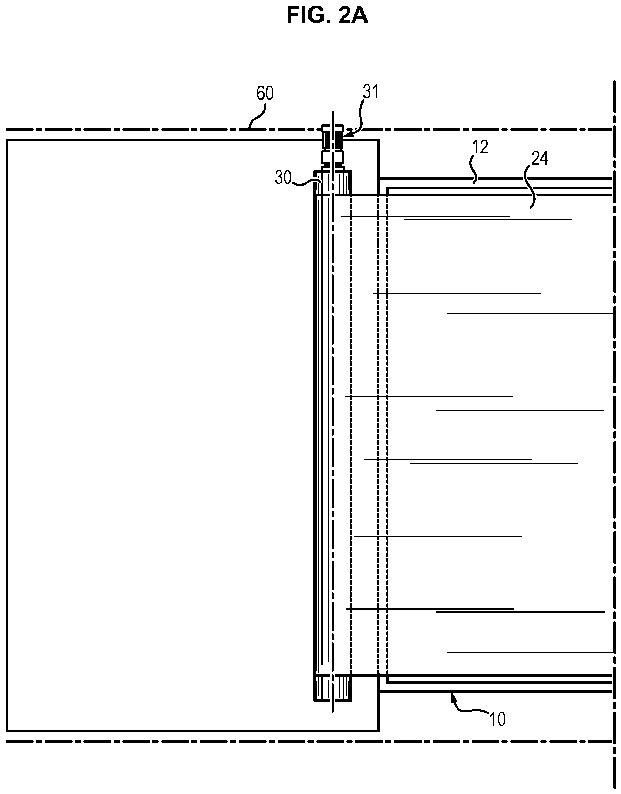

L'installation comprend en outre une aire de récupération 40 s'étendant d'un côté transversal du bassin 10. (figures 1A et 2A).

L'installation comprend un rouleau 30 s'étendant à côté du bassin, le long du bord transversal du bassin 10 au-dessus de l'aire de récupération 40. La toile mobile 24 est fixée le long d'un premier bord transversal au rouleau 30.

Le rouleau 30 peut être mis en rotation par des moyens d'entraînement sous la forme d'un moteur électrique 31.

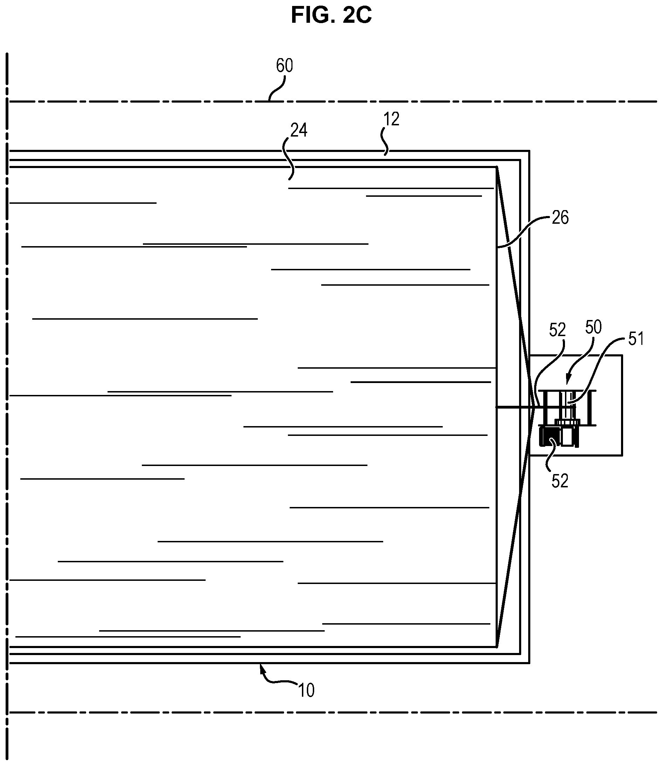

Par ailleurs, la toile mobile 24 est munie sur un deuxième bord transversal d'un raidisseur 26 sous la forme d'une tige métallique rigide s'étendant sur toute la largeur de la toile 24 (figures 1C et 2C).

L'installation comprend un treuil 50 disposé d'un côté transversal du bassin opposé au côté le long duquel s'étend le rouleau 30. Le treuil 50 comprend un tambour 51 et un moteur électrique 52 débrayable apte à entraîner le tambour 51 en rotation. Le treuil 50 comprend également un câble 52 relié au raidisseur 26 et apte à être enroulé autour du tambour 51 lorsque le tambour 51 est entraîné en rotation par le moteur électrique 52.

Dans une variante, le treuil 50 peut être un treuil manuel.

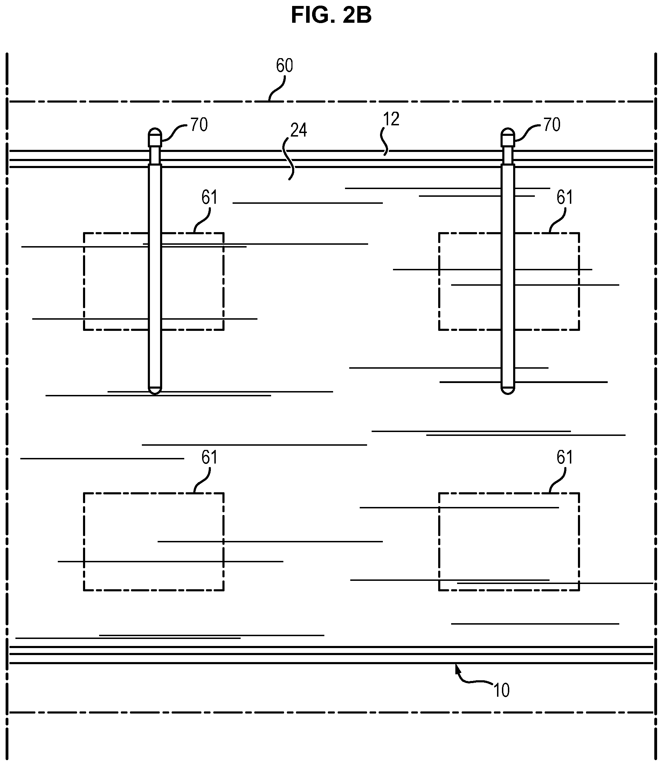

L'installation comprend des moyens d'amenée des boues à traiter comprenant des tuyauteries 70 débouchant au dessus de la toile mobile 24 (figures 1B et 2B), au centre du bassin 10.

L'installation comprend en outre une serre 60 de type « tunnel », s'étendant au dessus de l'aire de récupération 40 et du bassin 10 contenant l'ensemble filtrant 20. La serre 60 comprend des moyens de ventilation adaptés pour faire circuler de l'air entre l'extérieur et l'intérieur de la serre 60. L'air peut être entrainé en circulation le long de la face supérieure de la couche de boues à traiter et/ou le long de la face inférieure de la couche de boues à traiter.

On va maintenant décrire les différentes étapes d'un procédé de traitement de boues liquides utilisant l'installation de traitement.

Selon une première étape de traitement, les boues liquides sont floculées. A cet effet, un polymère est mélangé aux boues. Le polymère a pour propriété d'agréger les particules en suspension contenues dans les boues pour former et/ou accroître la taille des flocons.

Les boues floculées présentent alors une concentration comprise entre environ 2 et 30 grammes de matières sèches par litre.

Cette première étape de floculation a pour résultat de former des flocs de taille suffisamment importante par rapport à la taille des pores (ou mailles) de la toile fixe 23 afin d'optimiser l'égouttage.

On notera qu'en fonction des caractéristiques des boues à traiter, la première étape de floculation est ou non nécessaire.

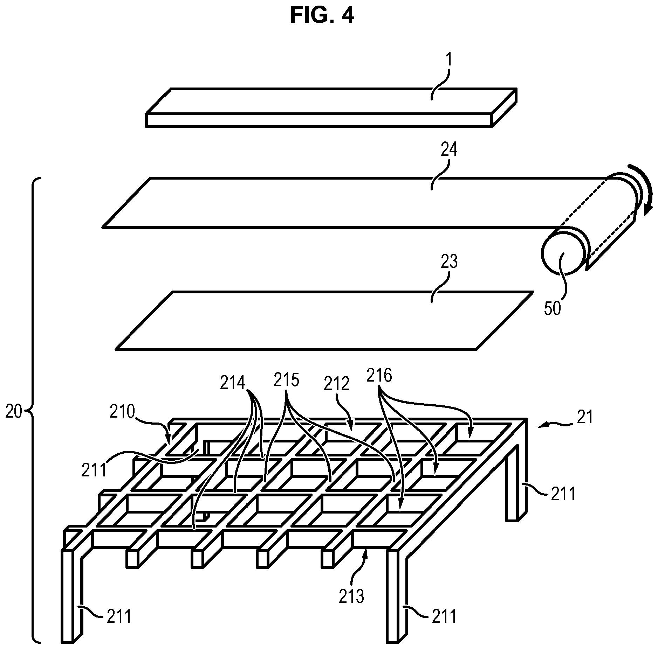

Selon une deuxième étape illustrée sur la figure 4, les boues floculées sont amenées par les tuyauteries d'amenée 70. Les boues floculées sont déversées sur la toile mobile 24 au centre du bassin et se répartissent sur toute la surface de la toile mobile 24.

Pour que l'eau puisse s'écouler convenablement sur toute la surface offerte par l'ensemble filtrant 20, les boues sont amenées en plusieurs points répartis dans la longueur du bassin 10.

La durée de cette deuxième étape, ainsi que l'épaisseur de la boue 1 floculée déversée, dépendent de la concentration initiale des boues liquides à traiter.

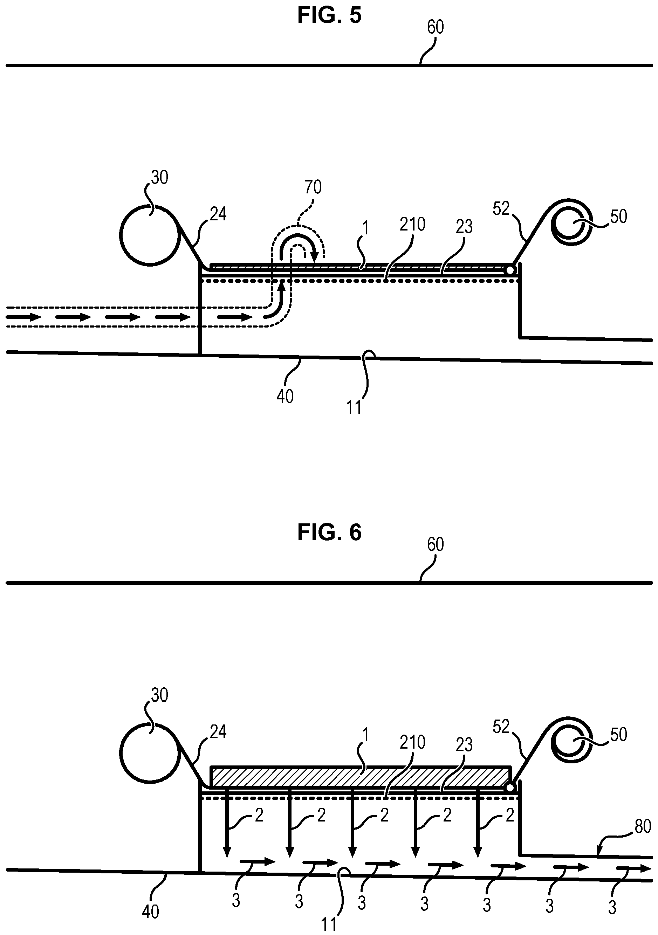

Selon une troisième étape représentée sur la figure 6, les boues floculées sont égouttées.

Cette troisième étape d'égouttage a pour fonction de séparer l'eau des matières en suspension contenues dans les boues à traiter.

A cet effet, on laisse reposer les boues 1 de manière à ce qu'une partie de l'eau qu'elles contiennent s'écoule par gravité à travers l'ensemble filtrant 20. L'eau s'écoule successivement à travers la toile mobile 24, la toile fixe 23 et la grille 210 (flèches 2). Les égouttures sont recueillies au fond 11 du bassin 10 et s'écoulent vers le réseau de collecte 80 en suivant la pente du fond 11 du bassin 10 (flèches 3).

La toile fixe 23 est cependant celle qui assure principalement la fonction d'égouttage.

Les boues 1 s'égouttent jusqu'à présenter une concentration d'environ 50 grammes de matières sèches par litre.

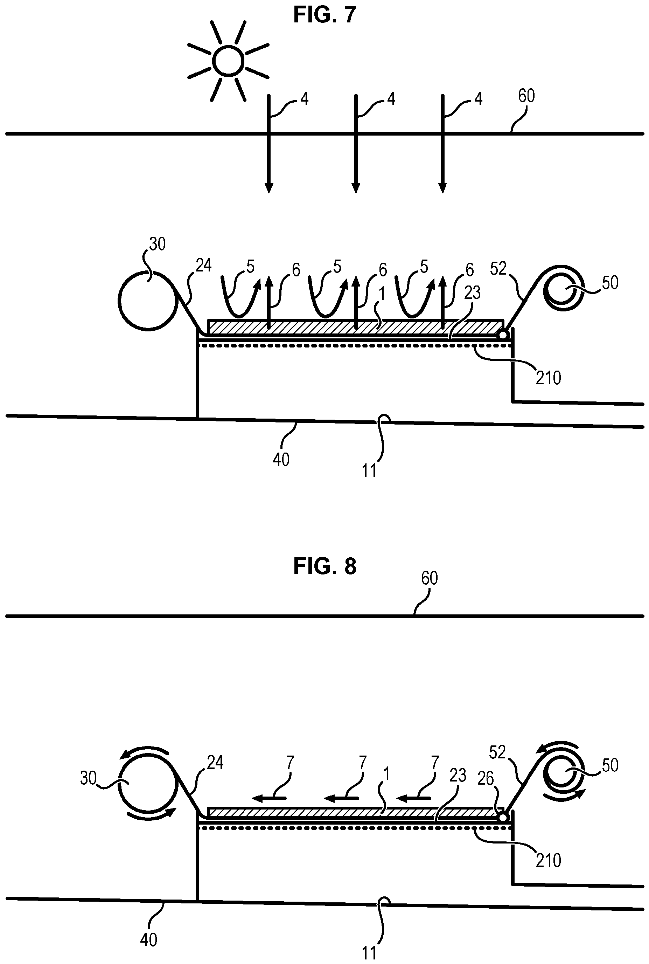

Selon une quatrième étape représentée sur la figure 7, les boues égouttées sont séchées. A cet effet, on laisse reposer les boues 1 pendant une durée d'environ 4 à 5 semaines. Durant cette période, les boues sont soumises simultanément à l'action de la chaleur générée par le rayonnement solaire qui traverse la serre 60 (flèches 4), à l'action de la température et de l'hygrométrie de l'air présent dans la serre 60 et aux échanges entre l'air mis en circulation par les moyens de ventilation (flèches 5) et la boue 1. La conjonction de ces actions provoque l'évaporation rapide d'une partie de l'eau contenue dans les boues 1 (flèches 6).

Lors de cette quatrième étape, la conjonction de la chaleur et de la circulation de l'air favorise l'évaporation de l'eau contenue dans les boues et accélère leur séchage.

La serre 60 protège les boues des précipitations et permet un chauffage efficace des boues durant les périodes d'ensoleillement. Il est possible de réguler le séchage par différentes techniques connues : notamment en ouvrant la serre, en appliquant une ventilation naturelle, en orientant les ouvertures en fonction de la direction des vents dominants ou du soleil, ou une ventilation forcée, à l'aide de moyens mécaniques de brassage d'air (ventilateurs).

La boue 1 est séchée jusqu'à présenter une siccité d'environ 50%, soit 500 grammes de matière sèche par kilogramme de boue.

Selon une cinquième étape représentée sur la figure 8, le treuil 50 est débrayé et on entraîne le rouleau 30 en rotation de manière translater la toile mobile 24 sur la toile fixe 23 (flèches 7). Le rouleau 30 est entraîné à une vitesse de rotation d'environ 4 mètres par minute. La toile mobile 24 est enroulée autour du rouleau 30, ce qui a pour effet de dérouler le câble 52 à partir du treuil 50.

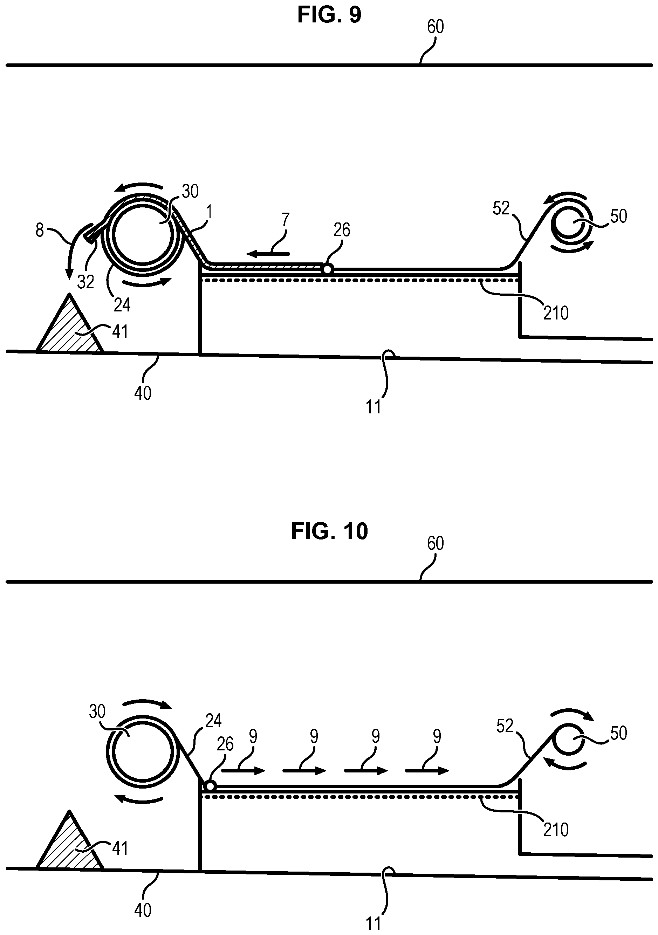

Selon une sixième étape représentée sur la figure 9, on récupère la boue séchée. A cet effet, on enroule la toile mobile 24 autour du rouleau 30. La boue 1 séchée est entraînée par la toile mobile 24. La boue 1 tombe en contrebas du rouleau 30 (flèche 8) sur l'aire de récupération 40 en formant un amas 41. La vitesse de rotation du rouleau 30 permet à un opérateur de surveiller le déroulement de l'étape de récupération et d'interrompre la rotation du rouleau 30 en cas de problème. Une racle 32 formé d'une lame métallique s'étendant le long du rouleau 30 et en contact avec la toile mobile 24 permet de racler la boue séchée sur le rouleau 30.

Selon une septième étape représentée sur la figure 10, la totalité de la boue séchée 1 a été prélevée de la toile mobile 24. L'amas 41 de boue séchée présente une hauteur d'environ 60 centimètres et une longueur d'environ 5 mètres. Il est constitué de boue séchée présentant une siccité d'environ 500 grammes de matière sèche par kilogramme de boue.

Le rouleau 30 est alors débrayé et on actionne alors le treuil 50 pour enrouler le câble 52.

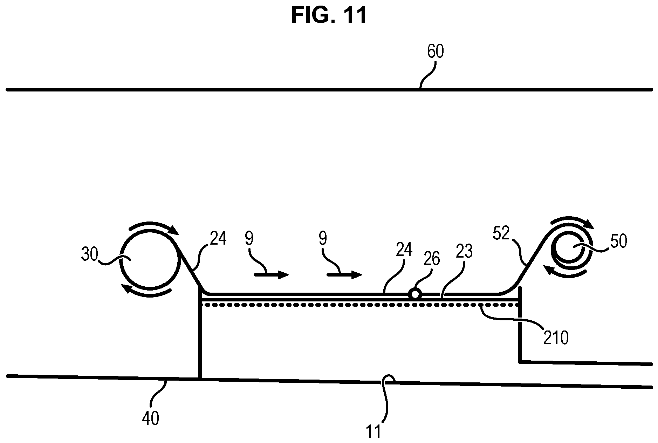

Selon une huitième étape illustrée sur la figure 11, on translate la toile mobile 24 sur la toile fixe 23 (flèches 9) pour recouvrir à nouveau la toile fixe 23.

Cette huitième étape peut être réalisée à l'aide d'un treuil de rappel.

A la fin de cette huitième étape, l'installation est à nouveau prête pour recevoir de la boue floculée et renouveler les étapes de traitement de la première à la huitième.

Selon une neuvième étape, les boues séchées sont stockées dans des alvéoles adaptées à la reprise par un engin chargeur.

L'utilisation de la toile mobile 24 facilite la récupération des boues après traitement. A la fin de la septième étape, les boues séchées se présentent sous la forme d'un amas qui peut être facilement évacué. En particulier, les boues séchées peuvent être collectées sur l'aire de récupération par des équipements de ramassage mécanisés.

On remarquera également que le procédé permet de réaliser sur une même installation l'étape d'égouttage (troisième étape) et l'étape de séchage (quatrième étape).

Dans un mode de réalisation de l'invention, l'installation de traitement comprend plusieurs bassins de traitement contenant chacun un ensemble filtrant. Les bassins sont utilisés en parallèle de manière décalée dans le temps de manière à réaliser un roulement alimentation en boues / séchage / boues sèches.

Par exemple, l'installation peut comprendre quatre bassins de traitement. Chaque semaine, l'un des bassins est vidé des boues séchées qu'il contient et rempli par des boues à traiter. Le roulement dure quatre semaines.

L'invention est définie par les revendications annexées.

## Revendications

1. Installation de traitement de boues comprenant un ensemble filtrant (20) destiné à être recouvert de boues à traiter (1), l'ensemble filtrant comprenant :
- un support (21) comprenant une grille (210) rigide présentant une face supérieure (212) et une face inférieure (213) et comprenant une pluralité d'ouvertures (216) s'étendant entre la face supérieure (212) et la face inférieure (213), à travers lesquelles de l'eau issue des boues peut s'écouler, et
- deux toiles souples (23, 24), incluant une première toile (23) fixe par rapport à la grille (210) et disposée en contact avec la face supérieure (212) de la grille (210), et une deuxième toile (24) mobile par rapport à la grille (210) de sorte que lorsque les boues à traiter recouvrent l'ensemble filtrant, les toiles (23, 24) se trouvent entre les boues à traiter (1) et la grille (210), et
- des moyens mécaniques (30, 31) adaptés pour déplacer en translation la deuxième toile souple (24) par rapport à la grille (210).

2. Installation selon la revendication 1, comprenant un bassin (10) de récupération de l'eau comprenant un fond (11), et dans lequel le support (21) est adapté pour maintenir la grille (210) à distance du fond (11) de manière à ménager un espace dépourvu de gravier ou de sable entre la grille (210) et le fond (11).

3. Installation selon l'une des revendications 1 ou 2, dans laquelle la première toile souple (23) est perméable pour permettre à l'eau issue des boues (1) de s'écouler à travers la première toile (23) tout en retenant de la matière en suspension dans les boues à traiter.

4. Installation selon l'une des revendications 1 à 3, dans laquelle les moyens mécaniques (30, 31) comprennent un rouleau (30) sur lequel la deuxième toile souple (24) peut être enroulée.

5. Installation selon l'une des revendications 1 à 4, comprenant des moyens (40, 32) pour récupérer les boues séchées (1) entraînées par la deuxième toile souple (24) lors de son déplacement.

6. Installation selon l'une des revendications 1 à 5, dans laquelle les toiles souples (24, 23) sont perméables, la première toile souple (23) ayant des pores plus petits que ceux de la deuxième toile souple (24).

7. Procédé de traitement de boues, comprenant des étapes de :
- recouvrir un ensemble filtrant (20) de boues à traiter (1), l'ensemble filtrant (20) comprenant un support (21) comprenant une grille rigide (210) présentant une face supérieure (212) et une face inférieure (213) et comprenant une pluralité d'ouvertures (216) s'étendant entre la face supérieure (212) et la face inférieure (213), et deux toiles souples (23, 24) disposées entre les boues traiter (1) et la grille (210), incluant une première toile (23) fixe par rapport à la grille (210) et disposée en contact avec la face supérieure (212) de la grille (210), et une deuxième toile (24) mobile par rapport à la grille (210),
- laisser reposer les boues (1) de manière à ce que de l'eau issue des boues (1) s'écoule à travers les ouvertures (216) de la grille (210), et
- déplacer en translation la deuxième toile souple (24) par rapport à la grille (210).

8. Procédé selon la revendication 7, dans lequel la grille (210) est maintenue à distance du fond (11) d'un bassin (10) de récupération de l'eau, de manière à ménager un espace dépourvu de gravier ou de sable entre la grille (210) et le fond (11).

9. Procédé selon l'une des revendications 7 ou 8, dans lequel la première toile souple (23) est perméable pour permettre à l'eau issue des boues (1) de s'écouler à travers la première toile (23) tout en retenant de la matière en suspension dans les boues à traiter.

10. Procédé selon l'une des revendications 8 à 10, dans lequel l'étape consistant à déplacer la deuxième toile souple (24) comprend l'étape consistant à enrouler la deuxième toile souple (24) sur un rouleau (30).

11. Procédé selon l'une des revendications 7 à 10, comprenant en outre l'étape consistant à récupérer les boues séchées (1) entraînées par la deuxième toile souple (24) lors de son déplacement.

12. Procédé selon l'une des revendications 7 à 1113, dans lequel les toiles (24, 23) sont perméables, la première toile souple (23) ayant des pores plus petits que ceux de la deuxième toile souple (24).

13. Procédé selon l'une des revendications 7 à 12, dans lequel plusieurs ensembles filtrants sont utilisés en parallèle.

## Patentansprüche

1. Anlage zur Behandlung von Schlämmen, umfassend eine Filtereinheit (20), die bestimmt ist, von zu behandelnden Schlämmen (1) bedeckt zu sein, wobei die Filtereinheit umfasst:
- eine Stütze (21), umfassend ein starres Gitter (210), aufweisend eine Oberseite (212) und eine Unterseite (213) und umfassend eine Vielzahl von Öffnungen (216), die sich zwischen der Oberseite (212) und der Unterseite (213) erstrecken, durch welche das Wasser aus den Schlämmen abfließen kann,
- zwei elastische Tücher (23, 24), einschließend ein erstes, in Bezug zum Gitter (210) festes Tuch (23), das im Kontakt mit der Oberseite (212) des Gitters (210) angeordnet ist, und ein zweites, in Bezug zum Gitter (210) bewegliches Tuch, so dass, wenn die zu behandelnden Schlämme die Filtereinheit bedecken, sich die Tücher (23, 24) zwischen den zu behandelnden Schlämmen (1) und dem Gitter (210) befinden, und
- mechanische Mittel (30, 31), die ausgebildet sind, um das zweite elastische Tuch (24) in Bezug zum Gitter (210) verschiebend zu verlagern.

2. Anlage nach Anspruch 1, umfassend ein Wasserrückhaltebecken (10), umfassend einen Boden (11), und in welchem die Stütze (21) ausgebildet ist, das Gitter (210) beabstandet vom Boden (11) zu halten, so dass ein Raum ohne Kies oder Sand zwischen dem Gitter (210) und dem Boden (11) ausgebildet ist.

3. Anlage nach einem der Ansprüche 1 oder 2, wobei das erste elastische Tuch (23) durchlässig ist, um dem Wasser aus den Schlämmen (1) zu erlauben, durch das erste Tuch (23) bei Zurückhaltung des in den zu behandelnden Schlämmen suspendierten Materials zu fließen.

4. Anlage nach einem der Ansprüche 1 bis 3, wobei die mechanischen Mittel (30, 31) eine Walze (30) umfassen, auf die das zweite elastische Tuch (24) aufgerollt werden kann.

5. Anlage nach einem der Ansprüche 1 bis 4, umfassend Mittel (40, 32) zur Rückgewinnung der getrockneten Schlämme (1), die von dem zweiten elastischen Tuch (24) bei seiner Verlagerung transportiert werden.

6. Anlage nach einem der Ansprüche 1 bis 5, wobei die elastischen Tücher (24, 23) durchlässig sind, wobei das erste elastische Tuch (23) kleinere Poren als das zweite elastische Tuch (24) hat.

7. Verfahren zur Behandlung von Schlämmen, umfassend die folgenden Schritte:
- Bedecken einer Filtereinheit (20) mit zu behandelnden Schlämmen (1), wobei die Filtereinheit (20) eine Stütze (21) umfasst, umfassend ein starres Gitter (210), aufweisend eine Oberseite (212) und eine Unterseite (213) und umfassend eine Vielzahl von Öffnungen (216), die sich zwischen der Oberseite (212) und der Unterseite (213) erstrecken, und zwei elastische Tücher (23, 24), die zwischen den zu behandelnden Schlämmen (1) und dem Gitter (210) angeordnet sind, einschließend ein erstes, in Bezug zum Gitter (210) festes Tuch (23), das im Kontakt mit der Oberseite (212) des Gitters (210) angeordnet ist, und ein zweites, in Bezug zum Gitter (210) bewegliches Tuch (24),
- Ruhen lassen der Schlämme (1) derart, dass das Wasser aus den Schlämmen (1) durch die Öffnungen (216) des Gitters (210) fließt, und
- verschiebendes Verlagern des zweiten elastischen Tuchs (24) in Bezug zum Gitter (210).

8. Verfahren nach Anspruch 7, wobei das Gitter (210) beabstandet vom Boden (11) eines Wasserrückhaltebeckens (10) gehalten wird, so dass ein Raum ohne Kies oder Sand zwischen dem Gitter (210) und dem Boden (11) ausgebildet ist.

9. Verfahren nach einem der Ansprüche 7 oder 8, wobei das erste elastische Tuch (23) durchlässig ist, um den Wasser aus den Schlämmen (1) zu erlauben, durch das erste Tuch (23) bei Zurückhaltung des in den zu behandelnden Schlämmen suspendierten Materials zu fließen.

10. Verfahren nach einem der Ansprüche 8 bis 10, wobei der Schritt, der darin besteht, das zweite elastische Tuch (24) zu verlagern, den Schritt umfasst, der darin besteht, das zweite elastische Tuch (24) auf eine Walze (30) aufzuwickeln.

11. Verfahren nach einem der Ansprüche 7 bis 10, umfassend ferner einen Schritt, der darin besteht, die von dem zweiten elastischen Tuch (24) bei seiner Verlagerung transportierten getrockneten Schlämme (1) zu zurückzugewinnen.

12. Verfahren nach einem der Ansprüche 7 bis 11, wobei die Tücher (24, 23) durchlässig sind, wobei das erste elastische Tuch (23) kleinere Poren als das zweite elastische Tuch (24) hat.

13. Verfahren nach einem der Ansprüche 7 bis 12, wobei mehrere Filtereinheiten parallel verwendet werden.

## Claims

1. A facility for treating sludges comprising a filtering unit (20) intended to be covered with sludges to be treated (1), the filtering unit comprising:
- a support (21) comprising a rigid grid (210) having an upper face (212) and a lower face (213) and comprising a plurality of openings (216) extending between the upper face (212) and the lower face (213), through which the water from the sludges may flow, and
- two flexible webs (23, 24), including a first web (23) fixedly mounted relatively to the grid (210) and positioned in contact with the upper face (212) of the grid (210), and a second web (24) movable relatively to the grid (210) so that when the sludges to be treated cover the filtering unit, the webs (23, 24) are positioned between the sludges to be treated (1) and the grid (210), and
- mechanical means (30, 31) adapted for displacing in translation the second flexible web (24) relatively to the grid (210).

2. The facility according to claim 1, comprising a basin (10) for recovering water comprising a bottom (11), and wherein the support (21) is adapted for maintaining the grid (210) at a distance from the bottom (11) so as to make a space without any gravel or sand between the grid (210) and the bottom (11).

3. The facility according to one of claims 1 or 2, wherein the first flexible web (23) is permeable for allowing the water from the sludges (1) to flow through the first web (23) while retaining suspended material in the sludges to be treated.

4. The facility according to one of claims 1 to 3, wherein the mechanical means (30, 31) comprise a roller (30) on which the second flexible web (24) may be wound.

5. The facility according to one of claims 1 to 4, comprising means (40, 32) for recovering dried sludges (1) carried along by the second flexible web (24) during its movement.

6. The facility according to one of claims 1 to 5, wherein the flexible webs (24, 23) are permeable, the first flexible web (23) having smaller pores than those of the second flexible web (24).

7. A method for treating sludges, comprising steps of:
- covering a filtering unit (20) with sludges (1) to be treated, the filtering unit (20) comprising a support (21) comprising a rigid grid (210) having an upper face (212) and a lower face (213) and comprising a plurality of openings (216) extending between the upper face (212) and the lower face (213), and two flexible webs (23, 24) positioned between the sludges (1) to be treated and the grid (210), including a first web (23) fixedly mounted relatively to the grid (210) and positioned in contact with the upper face (212) of the grid (210), and a second web (24) movable relatively to the grid (210),
- letting the sludges (1) rest so that the water from the sludges (1) flows through the openings (216) of the grid (210), and
- displacing in translation the second flexible web (24) relatively to the grid (210).

8. The method according to claim 7, wherein the grid (210) is maintained at a distance from the bottom (11) of a basin (10) for recovering water, so as to make a space without any gravel or sand between the grid (210) and the bottom (11).

9. The method according to one of claims 7 or 8, wherein the first flexible web (23) is permeable for allowing water from the sludges (1) to flow through the first web (23) while retaining suspended material in the sludges to be treated.

10. The method according to one of claims 8 to 10, wherein the step consisting of displacing the second flexible web (24) comprises the step consisting of winding up the second flexible web (24) on a roller (30).

11. The method according to one of claims 7 to 10, further comprising the step consisting of recovering the dried sludges (1) carried along by the second flexible web (24) during its displacement.

12. The method according to one of claims 7 to 11, wherein the webs (24, 23) are permeable, the first flexible web (23) having smaller pores than those of the second flexible web (24).

13. The method according to one of claims 7 to 12, wherein several filtering units are used in parallel.
